# EUROPEAN PATENT SPECIFICATION

(11) **EP 1 688 602 B1**
(45) Date of publication and mention of the grant of the patent: **07.11.2007**
(21) Application number: 06100978.3
(22) Date of filing: 27.01.2006
(51) Int. Cl.: F02B 37/24, F01D 17/14

(54) **Variable-throat turbocharger and manufacturing method for constituent members of throat area varying mechanism**
Turbolader mit verstellbarem Einlass und Verfahren zur Herstellung von Teilen dessen Verstellungsmechanismus
Turbocompresseur à capacité variable et procédé de fabrication des éléments constitutifs du mécanisme de variation.

(30) Priority: 31.01.2005 JP 2005022995
(43) Date of publication of application: 09.08.2006
(73) Proprietor: MITSUBISHI HEAVY INDUSTRIES, LTD., Tokyo 108-8215 (JP)
(72) Inventor: Jinnai, Yasuaki Mitsubishi Heavy Ind., Ltd., 3000, Tana Sagamihara-shi Kanawaga (JP); Nakagawa, Hiroshi Mitsubishi Heavy Ind., Ltd., 3000 Tana Sagamihara-shi Kanagawa (JP); Inamura, Isamu Mitsubishi Heavy Ind., Ltd., 3000 Tana Sagamihara-sh Kanagawa (JP)
(74) Representative: Intes, Didier Gérard André

(56) References cited:
- EP-A- 1 120 546
- EP-A- 1 245 307
- EP-A- 1 536 103
- US-A- 4 659 295
- US-A- 4 804 316
- US-A1- 2004 261 413

## Description

### BACKGROUND OF THE INVENTION

### Field of the invention

The present invention relates to a method for manufacturing a variable-throat exhaust turbocharger of an internal combustion engine having a nozzle throat area varying mechanism(hereinafter called variable-throat mechanism) to vary the blade angle of a plurality of nozzle vanes rotatably supported by members in a turbine casing and a method for manufacturing constituent members of the variable-throat mechanism.

### Description of the Related Art

In the field of exhaust turbochargers of internal combustion engines, particularly small ones used for internal combustion engines for vehicles, an exhaust turbocharger is disclosed in Japanese Laid-Open Patent Application No. 59-78983 (hereafter referred to as patent literature 1), which is composed such that an exhaust turbine made of ceramic material which operates under high temperature and the compressor made of metal which operates under low temperature are connected by brazing.

In this exhaust turbocharger, the end portion of the shaft part of the ceramic turbine rotor is tapered, and a tapered hole is provided in the metal compressor wheel to be engaged tightly with said tapered portion of the turbine rotor, whereby depressed portions are provided on the surface of one or both of the tapered shaft portion and tapered hole so that the tapered shaft portion is connected with the tapered hole by the medium of brazing filler metal which will fill the depression. By this, highly accurate connection between the ceramic material and metal material is realized, and rigidity of connection between the ceramic turbine rotor and metal compressor wheel is increased by means of brazing filler metal.

In the field of exhaust turbochargers, particularly small ones used for an internal combustion engines for vehicles, a variable-throat exhaust turbocharger equipped with a variable-throat turbine with which flow rate of exhaust gas entering the turbine rotor through the scroll of the turbine casing can be varied in accordance with operating conditions of the engine in order that the exhaust gas flow matches the optimal operation condition of the turbocharger, has spread widely in recent years.

In the variable-throat turbocharger like this, among the constituent members of the variable-throat mechanism to vary the blade angle of a plurality of the nozzle vanes, drive pins are connected to a drive ring which is engaged with a lever plate connecting to the nozzle vanes by the medium of nozzle shafts and a control sleeve engaging with the drive ring is connected to a lever enlinked to an actuator, and these connections are usually performed in a way that the drive pins and a control sleeve, which are shaft members, are fixed to the drive ring and lever, which are members having a hole or a plurality of holes, by means of welding or caulking.

Although there has been proposed in patent literature 1 as mentioned above a method for connecting a ceramic turbine rotor to a compressor wheel made of metal by brazing as a method for connecting constituent members of an exhaust turbocharger, however, this connecting method includes problems as described hereunder, so it can not be applied to connecting constituent members of a variable-throat mechanism.

The method of connecting by brazing proposed in patent literature 1 is applied to connect a compressor wheel to a turbine rotor to which high torque is loaded at high temperature, and depressions are provided on the surface of the tapered portion of the turbine rotor shaft and on the surface of the tapered hole of the compressor wheel to fill brazing filler metal therein. In case that the brazing filler metal is filled imperfectly in the depressions, fracture may occur at this part.

Therefore, in this method for connecting the turbine rotor to the compressor wheel, it is necessary that the brazing in the range of depressions is uniform and reliable, and it will take a good deal of processing hours to connect the turbine rotor to the compressor wheel by brazing.

Further, in the method for connecting the turbine rotor to compressor wheel, it is difficult to confirm or check infiltration and spreading of the brazing filler metal to the far side range of the depression toward the bottom of the hole in the compressor wheel. So, it is difficult to detect defects in the connection, and stable quality of the turbocharger can not be maintained.

Therefore, the method for connecting by means of brazing of patent literature 1 is not applicable to connecting constituent members of a variable-throat mechanism.

### SUMMARY OF THE INVENTION

The object of the present invention is to provide an exhaust turbocharger equipped with a variable-throat mechanism in which brazing is achieved with a small number of man-hour and at low cost, and which is stable in quality without fracture of brazing parts of constituent members.

To attain the object, the present invention proposes a variable-throat exhaust turbocharger equipped with a variable-throat mechanism for varying the blade angle of a plurality of nozzle vanes supported rotatably by members including turbine casing, wherein members having a through-hole or holes and a shaft member or members to be inserted into the through-hole or holes to be fixed therein among constituent members of said variable-throat mechanism are connected by means of brazing. In this variable-throat exhaust turbocharger, the connecting part of the through-hole and the shaft member is formed such that the shaft member is inserted into the through-hole with an interference fit provided between the shaft and the hole at normal temperature, a tapered portion is formed at the entrance side of the hole to insert the shaft so that brazing filler metal flows from the tapered portion toward the through-hole and the shaft member is fixed firmly in the through-hole.

Further, the invention proposes a method for manufacturing constituent members of the variable-throat mechanism of a variable-throat exhaust turbocharger for varying the blade angle of a plurality of nozzle vanes supported rotatably by members including turbine casing, wherein a tapered portion is formed at the entrance of the hole of a member having a through-hole or holes to insert a shaft member or members among the constituent members of the nozzle area varying mechanism, a piece or a plurality of pieces of brazing filler metal are put on the conical taper face, the shaft member is inserted into the through-hole with an interference fit provided between the shaft and the hole at normal temperature, then the integrated member of the member having a through-hole or a plurality of holes with the shaft member or members is heated to a temperature of between 1000°C and 1100°C in a vacuum furnace so that the brazing filler metal infiltrate into a little clearance created between the inside periphery of the hole and the outside periphery of the shaft by the heating, then the integrated member is cooled slowly and the shaft member or members is fixed firmly to the member having a through-hole or holes.

It is preferable that the invention is applied to any one of the connecting part of a drive ring with drive pins or a control sleeve with a lever or both of them.

The invention was made by giving attention to connecting by means of brazing constituent members of the variable-throat mechanism, to which large torque does not exert as does to a power transmitting members, reliably by a simple method. According to the invention, the drive ring having through-holes and drive pins among constituent members of the variable-throat mechanism can be firmly connected and fixed together very easily compared to the conventional art as disclosed in patent literature 1, by putting a piece or a plurality of pieces of brazing filler metal on a point or points on the circumferential face of the tapered portion formed at the entrance side of each of the through-holes of the drive ring, the drive pins are inserted into the holes with an interference fit provided between the pin and hole at normal temperature, the integrated member of the drive ring with drive pins is heated in the vacuum furnace to a high temperature of between 1000°C and 1100°C.

In this way, brazing of the shaft member or members to the member having a through-hole or holes can be performed with very small number of man-hour and at low cost.

As the shaft member or members are fitted to the through-hole or holes of the member having a through-hole or holes with a piece or pieces of brazing filler metal put on a point or points on the circumferential taper face at the entrance of the through hole or holes for inserting the shaft member or members to obtain the integrated member of the member having a through-hole or holes and shaft member or members and then the integrated member is heated in the vacuum furnace to a high temperature of between 1000°C and 1100°C, the brazing filler metal can infiltrate into the clearance created between the inside periphery of the hole and the outside periphery of the shaft member by heating, and the brazing filler metal spreads uniformly all over the clearance only by putting a piece or pieces of brazing filler metal on a point or points on the circumferential face of the tapered portion, as a result very firm brazing connection can be achieved.

Further, as the drive pin is brazed in the through-hole, infiltration of brazing filler metal all over from the entrance side of the hole to the other side thereof can be easily confirmed or checked, so an integrated member having defect in the brazed portion can be found easily and selected out, and stable quality of the member can be maintained.

Therefore, according to the invention, the integrated member consisting of the drive ring connected with the drive pins by means of brazing of high connection rigidity can be obtained.

In the invention, it is preferable that each connecting part of the member having a through-hole or holes with the shaft member or members is configured such that a clearance gap or gaps are formed on the inside periphery of the through-hole to extend along the axial direction of the through-hole with a depth of 0.05~0.5 mm from the inside periphery of the through-hole for allowing brazing filler metal to infiltrate into the clearance gap or gaps.

With this configuration, even in a case that the little clearance created between the inside periphery of the through-hole of the member having a through-hole or holes and the outside periphery of the shaft member or members when the integrated member of the member having a through-hole or holes with the shaft member or members is heated to a high temperature in the vacuum furnace is too little because of small difference in coefficient of thermal expansion between them, the brazing filler metal can intrude into the clearance gap or gaps formed as a depression or depressions from the inside periphery of the through-hole, so the brazing filler metal infiltrate evenly all over between the inside periphery of the member having a through-hole or holes and the outside periphery of the shaft member or members. Therefore, even if there is a difference in coefficient of thermal expansion between the member having a through-hole or holes and shaft member, the connecting part of them can be brazed firmly and reliably.

When pressing in the drive pin into the through-hole of the drive ring, high internal pressure is exerted on the through-hole, and there may occur scarring, cracks, or roughening of surface.

For example, when intending to secure enough interference for press-fitting or when the surface is treated by surface treatment such as chromizing and the pressed-in surface tends to be influenced by the press-fit and becomes rough, there arises a little disadvantage from the viewpoint of strength. According to the invention, clearance gap or gaps are provided for allowing brazing filler metal to intrude and the brazing filler metal intrudes into the clearance gap or gaps of which the surface is not scratched, so strong connection can be achieved.

In the invention, it is preferable that said clearance gap or gaps are semicircular grooves of depth of 0.2 ~ 1 mm.

With this configuration, in a case that the coefficient of thermal expansion of the member having a through-hole or holes is very large and that of the shaft member is very small, thus difference in coefficient of thermal expansion between the member having a through-hole or holes and the shaft member or members is large, tensile stress occurring at the brazed part when the integrated member is cooled after being heated to a high temperature is eased by the presence of the semicircular clearance gap, so preventing fracture of the brazing welded part due to excessive tensile stress occurring at the brazed part.

According to the present invention, the connection of shaft members such as the drive pins to a member having through-holes such as the drive ring, and the connection of a shaft member such as the control sleeve to a member having a through-hole such as the lever, which are constituent members of the nozzle throat varying mechanism, can be performed easily by the simple method in which the a piece or pieces of brazing filler metal are put on point or points on the conical taper face provided at the entrance of the through-hole for inserting the shaft member, the shaft member is inserted into the through-hole with an interference fit provided between the shaft and the hole at normal temperature, and then the integrated member of the member having a through-hole or holes with the shaft member or members is heated to a high temperature.

In this way, brazing of the shaft member or members to the member having a through-hole or holes can be performed with very small number of man-hours and at low cost.

Further, the shaft member or members are fitted to the through-hole or holes of the member having a through-hole or holes with a piece or pieces of brazing filler metal put on a point or points on the circumferential taper face at the entrance of the through-hole or holes for inserting the shaft member or members in order to obtain the integrated member of the member having a through-hole or holes with the shaft member or members, and then the integrated member is heated in the vacuum furnace to a high temperature of between 1000°C and 1100°C, the brazing filler metal can infiltrate into the clearance created between the inside periphery of the through-hole and the outside periphery of the shaft member by heating, and the brazing filler metal spreads uniformly all over the clearance only by putting a piece or pieces of brazing filler metal on a point or points on the circumferential face of the tapered portion of the through-hole, as a result very firm brazing connection can be achieved and a variable-throat mechanism, of which the strength of the connection of brazing welded part is very high with stable quality, can be obtained.

### BRIEF DESCRIPTION OF THE DRAWINGS

FIG. 1 is a longitudinal sectional view of a relevant part of a variable-throat exhaust turbocharger equipped with a variable-throat mechanism according to the present invention.
FIGS.2 are representations of the first embodiment of the present invention, FIG.2A is a front view of a drive ring, and FIG.2B is a sectional view taken along line A-A in FIG.2A.
FIG.3 is an enlarged sectional view showing the detail of the connecting part (corresponding to the part indicated by an arrow Z in FIG.2B) of a drive pin with the drive ring of the first embodiment of the invention.
FIG.4 is an enlarged front view of a through hole in the drive ring of the first embodiment.
FIG.5 is an enlarged front view of a through hole in the drive ring showing the second embodiment of the invention.
FIG.6 is an enlarged front view of a through hole in the drive ring showing the third embodiment of the invention.
FIGS.7A and 7B show the fourth embodiment of the invention, FIG.7A is a front view of the drive ring, and FIG. 7B is an enlarged sectional view showing the detail of the connecting part of a control sleeve with a lever.

### DETAILED DESCRIPTION OF THE PREFERRED EMBODIMENTS

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

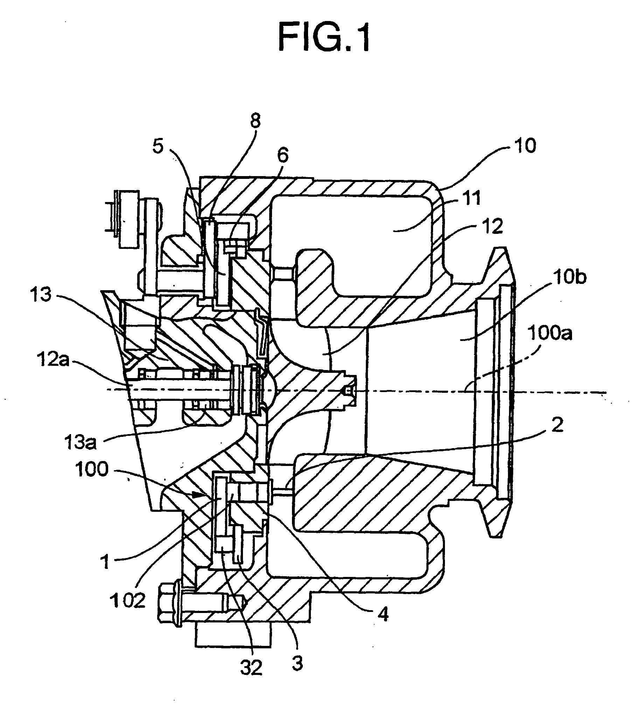

FIG.1 is a longitudinal sectional view of a relevant part of a variable-throat exhaust turbocharger equipped with a variable-throat mechanism according to the present invention.

Referring to FIG.1, reference numeral 10 is a turbine casing, 11 is a scroll chamber formed inside the turbine casing 10. Reference numeral 12 is a turbine rotor of radial flow type, which is connected to a compressor wheel not shown coaxially and of which the turbine shaft 12a is supported for rotation by a bearing housing 13 by means of bearings 13a. Reference numeral 100a shows the center of rotation of the exhaust turbocharger.

Reference numeral 2 is a nozzle vane, plural nozzle vanes are arranged circumferentially equally spaced in an annular flow passage for exhaust gas formed in the inner side of the scroll chamber 11, and a nozzle shaft 102 of each of the nozzle vanes is supported rotatably by a nozzle mount 4 fixed to the turbine casing 10 so that the blade angle of the nozzle vane 2 can be varied by means of a variable-throat mechanism.

Reference numeral 3 is a drive ring formed into an annular plate and supported rotatably on a part of the periphery of the nozzle mount 4. A plurality of drive pins 32 are fixed to the drive ring 3 circumferentially equally spaced. Reference numeral 1 are lever plates each of which is engaged with the drive pin 32, the groove provided in the input side(outer side end part) thereof being engaged with drive pin 32 and the nozzle shaft 102 being fixed to the output side(center side end part) thereof.

Reference numeral 8 is a crank mechanism connected to an actuator not shown which is to drive the nozzle vanes 2, 5 is a lever connected to the crank mechanism 8, and 6 is a control sleeve which is fixed to the lever 5 and engages with the drive ring 3 to rotate the drive ring 3.

In the variable-throat exhaust turbocharger with the variable-throat mechanism, exhaust gas of an internal combustion engine not shown entered the scroll chamber 11 enters annular flow passage while swirling along the convolution of the scroll chamber 11. The exhaust gas flows through the spaces between the nozzle vanes to enter the turbine rotor 12 from the periphery thereof to flow in the radial direction toward the center and to flow out in the axial direction while exerting expansion work upon the turbine rotor 12. Then, the exhaust gas flowing out from the turbine rotor flows through the outlet passage 10b of the turbine casing and is exhausted outside.

When controlling exhaust gas flow through the exhaust turbine, the blade angle of the nozzle vanes 2 is determined by a blade angle control means not shown so that the flow rate of the exhaust gas flowing through the spaces between the nozzle vanes can be set to a desired value. The actuator not shown rotates the drive ring 3 to rotate the nozzle vanes 2 to the angle determined by the blade angle control means by way of the crank mechanism 8, lever 5, and control sleeve 6.

When the drive ring 3 is rotated, each lever plate 1 is swung around the center axis of each nozzle shaft 102, which is supported rotatably in the nozzle mount, by each of the drive pins 32 fixed to the drive ring 3 circumferentially equally spaced. Each nozzle shaft 102 fixed to each lever plate is rotated and each nozzle vane 2 integral with each nozzle shaft 102 is rotated, thus the blade angle of the nozzle vanes is varied.

The present invention relates to an improvement of the connection of the shaft members to the members having through-holes such as the connection of the drive pins to the drive ring and the connection of the control sleeve to the lever in the variable-throat exhaust turbocharger equipped with the variable-throat mechanism composed as described above.

### [First embodiment]

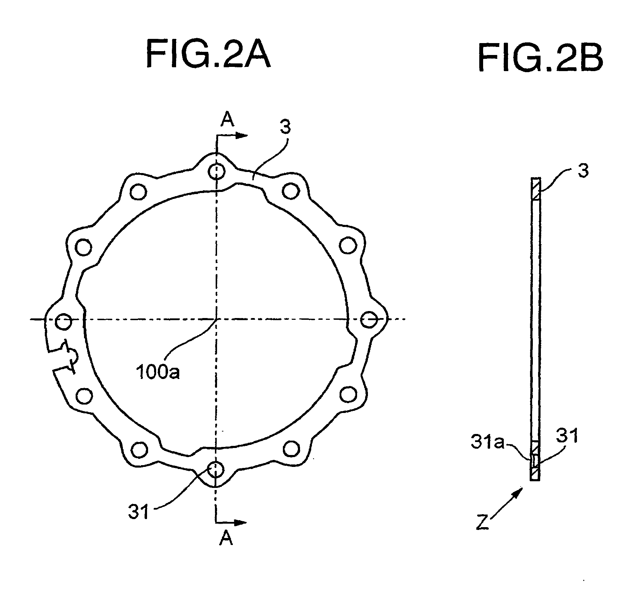

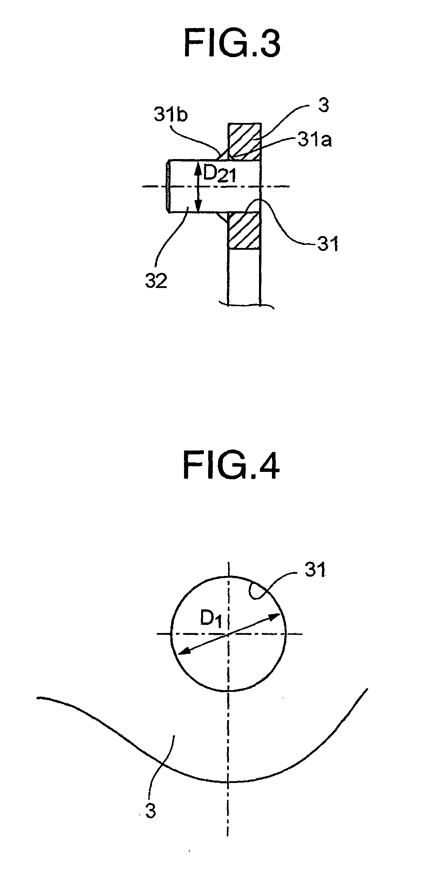

FIGS.2A and 2B are representations of the first embodiment of the present invention, FIG.2A is a front view of a drive ring, and FIG.2B is a sectional view taken along line A-A in FIG.2A. FIG.3 is an enlarged sectional view showing the detail of the connecting part(corresponding to the part indicated by an arrow Z in FIG.2B) of a drive pin with the drive ring of the first embodiment of the invention, and FIG.4 is an enlarged front view of a through hole in the drive ring of the first embodiment.

Referring to FIGS.2 to 4, reference numeral 3 is the drive ring(member having holes) of the variable-throat mechanism 100(see FIG.1), elements having reference 31 are through-holes provided circumferentially equally spaced for receiving the drive pins 32. Each drive pin (shaft member) 32 is fixed to each of the through-holes 31 by brazing. A tapered portion 31a is formed at an end of the through-hole 31 for inserting the drive pin.

The method for connecting the drive pin 32 to the drive ring 3 in the first embodiment will be explained hereunder.

First, the through-hole 31 for receiving the drive pin 3 is drilled to be a perfect circle of diameter D1, then the tapered portion 31a is formed at the inlet side end of the through hole 31 for receiving the drive pin 32. A piece or pieces of brazing filler metal 31b are put on a point or points on the circumferential surface of the tapered portion 31a, and the drive pin 32 is inserted into the hole 31 with an interference fit provided between the pin 32 and hole 31 at normal temperature (they are finished such that the diameter D21 of the pin 32 is slightly larger than the inside diameter D1 of the hole 31). By this, an integrated member of a drive ring 3 with drive pins 32 arranged circumferentially is obtained.

Then, the integrated member is heated in a vacuum furnace to 1000°C ~ 1100°C. The vacuum furnace is used for preventing the drive ring 3 and drive pins 32 from oxidation.

By heating in the vacuum furnace to a high temperature, the inside diameter D1 of the through-hole 31 of the drive ring 3 becomes larger than the diameter D21 of the drive pin 32, a very little clearance is created between the inside periphery of the hole 31 and the outside periphery of the drive pin 32, and the brazing filler metal 31b infiltrates from the tapered portion into the very little clearance.

Then, the integrated member is cooled slowly to solidify the brazing filler metal 31b in the furnace, thus the drive pin 32 is fixed firmly to the hole 31 of the drive ring 3.

As the drive ring 3 has already experienced high temperature when it is treated for chromizing and so on, there occurs no deterioration in material property due to the heat when brazing.

The present invention was made by giving attention to connecting constituent members of the variable-throat mechanism 100, to which large torque does not exert as does to a power transmitting members, reliably by means of brazing by a simple method. According to the first embodiment, the drive ring 3 having through-holes and drive pins 32 among constituent members of the variable-throat mechanism 100 can be firmly connected and fixed together very easily compared to the conventional art as disclosed in patent literature 1, by putting a piece or pieces of brazing filler metal on a point or points on the circumferential face of the tapered portion 31a formed at the entrance side of the through-hole 31 of the drive ring 3, the drive pins 32 are inserted into the hole 31 with an interference fit provided between the pin 32 and hole 31 at normal temperature, the integrated member of the drive ring 3 and drive pins 32 is heated in the vacuum furnace to a high temperature between 1000°C and 1100°C.

In this way, brazing of the drive pins 32 to the drive ring 3 can be performed with very small number of man-hours.

As the drive pins 32 are fitted to the holes 31 of the drive ring 3 with a piece or pieces of brazing filler metal put on a point or points on the circumferential taper face provided at the entrance of each of the holes 31 for inserting each pins 32 to obtain the integrated member of the drive ring with drive pins and then the integrated member is heated in the vacuum furnace to a high temperature of 1000°C ~ 1100°C, the brazing filler metal 31b can infiltrate into the clearance created between the inside periphery of the hole 31 and the outside periphery of the pin 32 by heating, and the brazing filler metal spreads uniformly all over the clearance only by putting a piece or pieces of brazing filler metal on a point or points on the circumferential face of the tapered portion 31a, as a result very firm brazing connection can be achieved.

Further, as the drive pin 32 is brazed in the through-hole 31, infiltration of brazing filler metal all over from the entrance side of the hole 31 to the other side thereof can be easily confirmed, so an integrated member having a defect in the brazed portion can be found easily and selected out, stable quality of the member can be maintained. Thus, the integrated member consisting of the drive ring 3 connected with the drive pins 32 by means of brazing, of which the strength of the connecting part is very high and quality is stable, can be obtained.

### [Second embodiment]

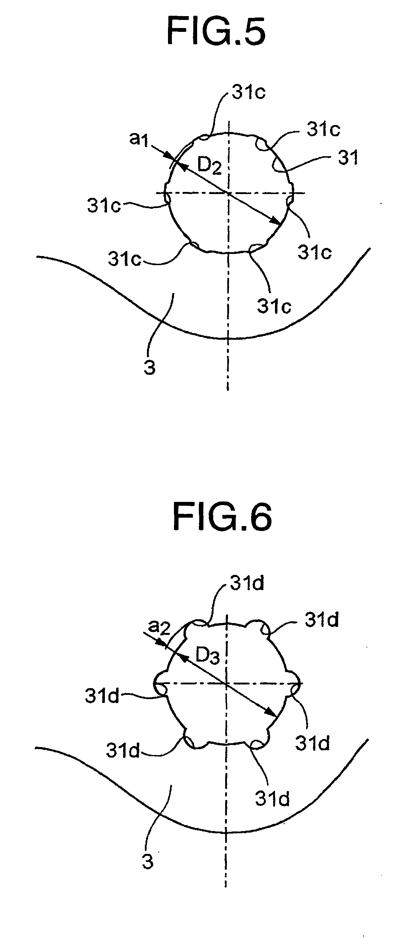

FIG.5 is an enlarged front view of a through hole in the drive ring showing the second embodiment of the invention.

In the second embodiment, one or a plurality of clearance gaps 31c (six gaps in this example) are provided between the inside periphery (of which the inside diameter is D2) of the through-hole 31 of the drive ring 3 and the outside periphery of the drive pin 32 by providing one or plurality of depressions on the inside periphery of the through-hole 31 for the brazing filler metal to infiltrate such that the depth a₁ of the clearance gap or gaps is between 0.05 and 0.5 mm(preferably between 0.05 and 0.1 mm).

According to the second embodiment, even in a case that the clearance is small between the inside periphery of the through-hole 31 and the outside periphery of the drive pin 32 when the integrated member of the drive ring 3 with drive pins 32 is heated to a high temperature in the vacuum furnace, because of small difference in coefficient of thermal expansion between the drive ring 3 and drive pin 32, the brazing filler metal 31b can intrude into the clearance gap or gaps 31c depressed from the inside periphery of the through-hole 31 by a depth of a₁. Thus, the brazing filler metal can infiltrate evenly all over between the inside periphery of the drive ring and the outside periphery of the drive pin 32. Therefore, even if difference in coefficient of thermal expansion between the drive ring 3 and drive pin 32 is small, the connecting part of the drive ring 3 to the drive pin 32 can be brazed firmly and reliably.

### [Third embodiment]

FIG.6 is an enlarged front view of a through hole in the drive ring showing the third embodiment of the invention.

In the third embodiment, one or a plurality of clearance gaps 31d(six gaps in this example) are provided between the inside periphery(of which the inside diameter is D3) of the through-hole 31 of the drive ring 3 and the outside periphery of the drive pin 32 by providing one or plurality of semicircular groove on the inside periphery of the through-hole 31 for the brazing filler metal to infiltrate such that the depth a₂ of the clearance gap or gaps is between 0.2 and 0.5 mm.

According to the third embodiment, in a case that the coefficient of thermal expansion of the drive ring 3 is very large and that of the drive pin 32 is very small, thus difference in coefficient of thermal expansion between the drive ring 3 and drive pin 32 is large, tensile stress occurring at the brazed part when the integrated member is cooled after being heated to a high temperature is eased by the presence of the semicircular clearance gap 31d, so preventing fracture of the brazing welded part due to excessive tensile stress occurring at the brazed part.

### [Fourth embodiment]

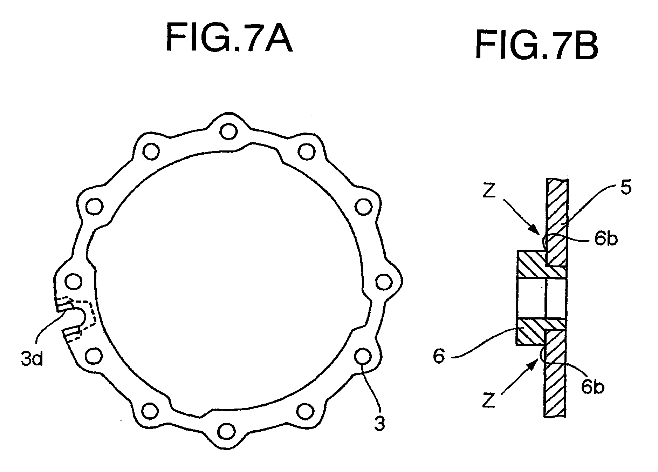

FIGS.7A and 7B show the fourth embodiment of the invention, FIG.7A is a front view of the drive ring, and FIG.7B is an enlarged sectional view showing the detail of the connecting part of a control sleeve with a lever.

In the fourth embodiment, the lever 5 is connected to the crank mechanism 8 enlinked to the actuator (not shown), to the control sleeve 6 engaging with the drive ring 3 at a groove 3d provided at a peripheral part of the drive ring 3 to rotate the drive ring 3. The connection of the lever 5 is performed by fixing the control sleeve 6 to the lever 5 by means of brazing in a manner similar to that of the first embodiment (except that the tapered portion of the first embodiment is not provided in this fourth embodiment).

In FIG.7B, brazing part is designated by symbols 6b as indicated by arrows Z.

Action and effect of the fourth embodiment is similar to those of the first embodiment.

While the connection of the drive ring 3 with the drive pin 32 and the connection of the control sleeve 6 with the lever 5 are explained in the above embodiments, it is understood that invention is not limited thereto or thereby and applicable to connection of members having a through-hole or holes with a shaft member or members to be inserted into the hole or holes to be fixed therein among constituent members of variable-throat mechanism 100.

According to the present invention, brazing can be achieved with a small number of man-hour and at low cost, and an exhaust turbocharger equipped with a variable-throat mechanism can be provided which is stable in quality without danger of fracture of brazing-welded parts of constituent members.

## Claims

1. A variable-throat exhaust turbocharger equipped with a nozzle throat area varying mechanism for varying the blade angle of a plurality of nozzle vanes (2) supported rotatably by members (31, 32) including turbine casing, wherein members having at least one through-hole (31) and at least one shaft member (32) to be inserted and fixed into the through-hole(s) (31) among constituent members of said nozzle throat area varying mechanism are connected by means of brazing,
**characterized in that** the connecting part of the through-hole (31) and the shaft member (32) is formed such that the shaft member (32) is inserted into the through-hole (31) with an interference fit provided between the shaft (32) and the hole (31) at normal temperature, a tapered portion (31a) is formed at the entrance side of the hole (31) to insert the shaft (32) so that brazing filler metal f lows from the tapered portion (31a) toward the through-hole (31) and the shaft member (32) is fixed firmly in the through-hole (31).

2. A variable-throat exhaust turbocharger according to claim 1, wherein each connecting part of the member (31, 32) having at least one through-hole (31) with the shaft member(s) (32) is configured such that at least one clearance gap (31c, 31d) is formed on the inside periphery of the through-hole (31) to extend along the axial direction of the through-hole (31) with a depth of between 0.05 and 0.5 mm from the inside periphery of the through-hole for allowing brazing filler metal to infiltrate into said at least one clearance gap (31c, 31d).

3. A variable-throat exhaust turbocharger according to claim 2, wherein said clearance gap(s) (31c) is a semicircular groove of depth of between 0.2 and 1 mm.

4. A variable-throat exhaust turbocharger according to any one of claims 1 to 3, wherein said connecting part of the member having through-holes (31) and the shaft member (32) is any one of the connecting part of a drive ring with drive pins (32) or a control sleeve (6) with a lever (5) or both of them.

5. A method for manufacturing constituent members of the nozzle throat area varying mechanism of a variable-throat exhaust turbocharger for varying the blade angle of a plurality of nozzle vanes (2) supported rotatably by members (31, 32) including turbine casing, wherein a tapered portion (31a) is formed at the entrance of the hole of a member having at least one through-hole (31) to insert at least one shaft member (32) among the constituent members of the nozzle area varying mechanism, at least a piece of brazing filler metal is put on the conical taper face, the shaft member (32) is inserted into the through-hole (31) with an interference fit provided between the shaft (32) and the hole (31) at normal temperature, then the integrated member of the member having at least one through-hole with the shaft member(s) (32) is heated to a temperature between 1000°C and 1100°C in a vacuum furnace so that the brazing filler metal infiltrate into a little clearance (31c, 31d) created between the inside periphery of the hole (31) and the outside periphery of the shaft (32) by the heating, then the integrated member is cooled slowly and the shaft member(s) (32) is fixed firmly to the member having at least one through-hole (31).

6. A method for manufacturing constituent members of the nozzle throat area varying mechanism of a variable-throat exhaust turbocharger according to claim 5, wherein the member having holes is a drive ring (3) and the shaft members are drive pins (32) of the nozzle throat area varying mechanism.

## Patentansprüche

1. Abgasturbolader mit variabler Verengung, ausgestattet mit einem Variationsmechanismus für den Düsenverengungsbereich zum Verändern des Blattwinkels einer Mehrzahl von Düsenflügeln (2), die drehbar von Bauelementen (31, 32) einschließlich eines Turbinengehäuses gestützt werden, wobei Bauelemente, die wenigstens eine Durchgangsöffnung (31) und wenigstens ein zwischen konstituierenden Bauelementen des Variationsmechanismus für den Düsenverengungsbereich in das/die Durchgangsöffnung/en (31) einzusetzendes und darin zu befestigendes Schaftelement (32) umfassen, durch Hartlöten verbunden sind, **dadurch gekennzeichnet, daß** der verbindende Teil der Durchgangsöffnung (31) und des Schaftelementes (32) derart ausgebildet ist, daß das Schaftelement (32) in die Durchgangsöffnung (31) mit einer Preßpassung eingesetzt ist, die bei Normaltemperatur zwischen dem Schaft (32) und der Öffnung (31) vorgesehen ist, an der Eingangsseite der Öffnung (31) ein sich verjüngender Abschnitt (31a) zum Einführen des Schaftes (32) derart ausgebildet ist, daß das Hartlötmetall von dem sich verjüngenden Abschnitt (31a) in Richtung der Durchgangsöffnung (31) fließt und das Schaftelement (32) fest in der Durchgangsöffnung (31) befestigt ist.

2. Abgasturbolader mit variabler Verengung nach Anspruch 1, wobei jeder verbindende Teil des Bauelementes (31, 32), das wenigstens eine Durchgangsöffnung (31) umfaßt, mit dem/den Schaftelementen (32) derart konfiguriert ist, daß mindestens ein Zwischenraum (31c, 31d) auf dem Innenumfang der Durchgangsöffnung (31) ausgebildet ist, um sich mit einer Tiefe zwischen 0,05 und 0,5 mm von dem Innenumfang der Durchgangsöffnung aus entlang der Axialrichtung der Durchgangsöffnung (31) zu erstrecken, um es dem Hartlötmetall zu erlauben, in den mindestens einen Zwischenraum (31c, 31d) einzudringen.

3. Abgasturbolader mit variabler Verengung nach Anspruch 2, wobei der/die Zwischenraum/-räume (31c) (eine) halbkreisförmige Nut(en) mit einer Tiefe zwischen 0,2 und 1 mm ist/sind.

4. Abgasturbolader mit variabler Verengung nach einem der Ansprüche 1 bis 3, wobei der verbindende Teil des Bauelementes, das die Durchgangsöffnungen (31) und das Schaftelement (32) umfaßt, ein beliebiger von dem verbindenden Teil eines Antriebsrings mit Antriebsstiften (32) oder eine Steuerhülse (6) mit einem Hebel (5) oder beides derselben ist.

5. Verfahren zur Herstellung von konstituierenden Bauelementen des Variationsmechanismus für den Düsenverengungsbereich eines Abgasturboladers mit variabler Verengung zum Verändern des Blattwinkels einer Mehrzahl von Düsenflügeln (2), die drehbar von Bauelementen (31, 32) einschließlich eines Turbinengehäuses gestützt werden, wobei an dem Eingang der Öffnung eines Bauelementes, das wenigstens eine Durchgangsöffnung (31) zum Einführen wenigstens eines Schaftelementes (32) zwischen den konstituierenden Bestandteilen des Variationsmechanismus für den Düsenverengungsbereich umfaßt, ein sich verjüngender Abschnitt (31a) vorgesehen ist, mindestens ein Stück Hartlötmetall auf die konische Verjüngungsfläche aufgelegt wird, das Schaftelement (32) in die Durchgangsöffnung (31) mit einer Preßpassung eingesetzt wird, die bei Normaltemperatur zwischen dem Schaft (32) und der Öffnung (31) vorgesehen ist, dann das integrierte Bauelement des Bauelementes, das mindestens eine Durchgangsöffnung mit dem/den Schaftelement(en) (32) umfaßt, in einem Vakuumofen auf eine Temperatur zwischen 1.000°C und 1.100 °C aufgeheizt wird, so daß das Hartlötmetall in einen kleinen durch das Erhitzen zwischen dem Innenumfang der Öffnung (31) und dem Außenumfang des Schaftes (32) geschaffenen Zwischenraum (31c, 31d) eindringt, dann das integrierte Bauelement langsam abgekühlt wird und das/die Schaftelement(e) (32) fest an dem Bauelement mit der mindestens einen Durchgangsöffnung (31) befestigt wird.

6. Verfahren zur Herstellung von konstituierenden Bauelementen des Variationsmechanismus für den Düsenverengungsbereich eines Abgasturboladers mit variabler Verengung nach Anspruch 5, wobei das Bauelement mit den Öffnungen ein Antriebsring (3) ist und die Schaftelemente Antriebsstifte (32) des Variationsmechanismus für den Düsenverengungsbereich sind.

## Revendications

1. Turbocompresseur d'échappement à capacité variable équipé d'un mécanisme de variation de la section d'entrée destiné à modifier l'angle d'aube d'une multiplicité d'aubes (2) supportées de façon rotative par des éléments (31, 32) incluant un carter de turbine, des éléments ayant au moins un trou débouchant (31) et au moins un élément d'arbre (32) devant être inséré et fixé dans le ou les trous débouchants (31) parmi des éléments constitutifs dudit mécanisme de modification de section d'entrée étant reliés par brasage,
**caractérisé en ce que** la partie de raccordement du trou débouchant (31) et de l'élément d'arbre (32) est formée de telle sorte que l'élément d'arbre (32) est inséré dans le trou débouchant (31) avec un ajustement serré prévu entre l'arbre (32) et le trou (31) à température normale, une partie conique (31a) est formée au niveau du côté d'entrée du trou (31) afin d'insérer l'arbre (32) de telle sorte que le métal de charge de brasage s'écoule depuis la partie conique (31a) vers le trou débouchant (31) et l'élément d'arbre (32) est fixé fermement dans le trou débouchant (31).

2. Turbocompresseur d'échappement à capacité variable selon la revendication 1, dans lequel chaque partie de raccordement de l'élément (31, 32) ayant au moins un trou débouchant (31) avec le ou les éléments d'arbre (32) est configurée de telle sorte que au moins un espace libre (31c, 31d) est formé sur la périphérie intérieure du trou débouchant (31) afin de s'étendre le long de la direction axiale du trou débouchant (31) avec une profondeur entre 0,05 et 0,5 mm depuis la périphérie intérieure du trou débouchant de façon à permettre au métal de charge de brasage de s'infiltrer dans ledit au moins un espace libre (31c, 31d).

3. Turbocompresseur d'échappement à capacité variable selon la revendication 2, dans lequel le ou lesdits espaces libres (31c) sont constitués par une rainure semi-circulaire d'une profondeur entre 0,2 et 1 mm.

4. Turbocompresseur d'échappement à capacité variable selon l'une quelconque des revendications 1 à 3, dans lequel ladite partie de raccordement des trous débouchants (31) et de l'élément d'arbre (32) est la partie de raccordement d'un anneau d'entraînement avec des axes d'entraînement (32) ou un manchon de commande (6) avec un levier (5) ou les deux.

5. Procédé de fabrication d'éléments constitutifs du mécanisme de variation de section d'entrée d'un turbocompresseur d'échappement à capacité variable destiné à modifier l'angle d'aube d'une multiplicité d'aubes d'entrée (2) supportées de façon rotative par des éléments (31, 32) incluant un carter de turbine, selon lequel une partie conique (31a) est formée à l'entrée du trou d'un élément ayant au moins un trou débouchant (31) afin d'insérer au moins un élément d'arbre (32) parmi les éléments constitutifs du mécanisme de variation de section d'entrée, au moins une pièce de métal de charge de brasage est placée sur la face conique, l'élément d'arbre (32) est inséré dans le trou débouchant (31) avec un ajustement serré prévu entre l'arbre (32) et le trou (31) à température normale, l'élément intégré de l'élément ayant au moins un trou débouchant avec le ou les éléments d'arbre (32) est chauffé à une température entre 1000°C et 1100°C dans un four sous vide de telle sorte que le métal de charge de brasage s'infiltre dans un petit espace libre (31c, 31d) créé entre la périphérie intérieure du trou (31) et la périphérie extérieure de l'arbre (32) grâce au chauffage, puis l'élément intégré est refroidi lentement et le ou les éléments d'arbre (32) sont fixés fermement sur l'élément ayant au moins un trou débouchant (31).

6. Procédé de fabrication d'éléments constitutifs du mécanisme de variation de section d'entrée d'un turbocompresseur d'échappement à capacité variable selon la revendication 5, selon lequel l'élément ayant des trous est un anneau d'entraînement (3) et les éléments d'arbre sont des axes d'entraînement (32) du mécanisme de variation de section d'entrée.
